(19)

**Europäisches Patentamt**
**European Patent Office**
**Office européen des brevets**

(11) **EP 4 174 361 A1**

(12) **EUROPEAN PATENT APPLICATION**
published in accordance with Art. 153(4) EPC

(43) Date of publication:
**03.05.2023 Bulletin 2023/18**

(21) Application number: **20942157.7**

(22) Date of filing: **26.06.2020**

(51) International Patent Classification (IPC):
**F17C 3/04** *(2006.01)* **B65D 88/12** *(2006.01)*

(52) Cooperative Patent Classification (CPC):
**B65D 88/12; F17C 3/04;** Y02E 60/32

(86) International application number:
**PCT/JP2020/025367**

(87) International publication number:
**WO 2021/260947 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **KAWASAKI JUKOGYO KABUSHIKI KAISHA**
**Kobe-shi, Hyogo 650-8670 (JP)**

(72) Inventors:
• **SHIMODA, Taichiro**
**Kobe-shi, Hyogo 650-8670 (JP)**
• **TOMINAGA, Haruhiko**
**Kobe-shi, Hyogo 650-8670 (JP)**

• **MOCHIDA, Kunihiko**
**Kobe-shi, Hyogo 650-8670 (JP)**
• **TAKAHASHI, Tsuneo**
**Kobe-shi, Hyogo 650-8670 (JP)**
• **IMAI, Tatsuya**
**Kobe-shi, Hyogo 650-8670 (JP)**
• **TAKATA, Hirotaka**
**Kobe-shi, Hyogo 650-8670 (JP)**
• **NAKADO, Hiroki**
**Kobe-shi, Hyogo 650-8670 (JP)**
• **TAKANASHI, Naoto**
**Kobe-shi, Hyogo 650-8670 (JP)**

(74) Representative: **Arnold & Siedsma**
**Bezuidenhoutseweg 57**
**2594 AC The Hague (NL)**

(54) **DOUBLE-SHELL TANK AND VESSEL**

(57) A double-shell tank that stores a low temperature liquid includes: an inner shell having a non-spherical hollow shell shape and including therein a storing portion; an outer shell that covers the inner shell; and powdered thermal insulation that is filled in a space surrounded by an outer wall of the inner shell and an inner wall of the outer shell to become a heat insulating layer. Then, a size of a top portion gap between the inner shell in an empty state and the outer shell is larger than a size of a bottom portion gap between the inner shell and the outer shell. A thickness of the powdered thermal insulation of the top portion gap in the empty state is larger than the size of the bottom portion gap.

FIG.3

## Description

## Technical Field

The present disclosure relates to a double-shell tank including an outer shell and an inner shell, and a ship including the double-shell tank.

## Background Art

Double-shell tanks have been known as tanks that store low temperature liquids. Generally, the double-shell tank includes: an inner shell that stores a low temperature liquid; an outer shell that covers the inner shell from an outside and is located away from the inner shell by a predetermined distance; and a heat insulating layer between the inner shell and the outer shell. For example, the heat insulating layer is made of powdered thermal insulation filled in between the inner shell and the outer shell. Pearlite is used as the powdered thermal insulation.

When constructing the double-shell tank, the inner shell and the outer shell are completed, and then, the powdered thermal insulation is filled in between the inner shell in an empty state and the outer shell. Therefore, when the low temperature liquid is supplied to the inner shell, and this causes thermal contraction of the inner shell, the gap between the inner shell and the outer shell may increase, and the powdered thermal insulation filled in between the inner shell and the outer shell may move downward. When the powdered thermal insulation moves downward, a space in which the powdered thermal insulation does not exist is generated at a tank top portion of the double-shell tank, and the thickness of the heat insulating layer at the tank top portion decreases. Herein, the "tank top portion" denotes a portion corresponding to a top portion of the double-shell tank in a space that is located outside the inner shell and inside the outer shell. When a portion where the thickness of the heat insulating layer is inadequate is generated in the double-shell tank, the heat insulating property of this portion deteriorates. By the deterioration of the heat insulating property, cold heat of the inner shell may be transferred to the outer shell, and this may generate frost on the outer shell. Thus, the corrosion of the outer shell may be caused. Moreover, when the amount of heat input to the inner shell increases by the deterioration of the heat insulating property, the amount of boil off gas of the low temperature liquid may increase, and the pressure of the inner shell may become excessive.

Therefore, the double-shell tank of PTL 1 includes the heat insulating layer including two layers, i.e., inner and outer layers that are an inside heat insulating layer made of a stretchable material (glass wool) that is stretchable in a radial direction of the inner shell and an outside heat insulating layer made of filler (pearlite). According to this double-shell tank, a space generated in the heat insulating layer by the thermal contraction of the inner shell is filled with the expanded stretchable material, and this suppresses the downward movement of the filler.

## Citation List

### Patent Literature

PTL 1: Japanese Laid-Open Patent Application Publication No. 2013-238285

## Summary of Invention

## Technical Problem

The present disclosure was made under these circumstances, and an object of the present invention is to provide a double-shell tank that can maintain a heat insulating layer having an appropriate thickness at a tank top portion even after powdered thermal insulation moves downward by contraction deformation of an inner shell, which is an approach different from an approach of the double-shell tank of PTL 1, and a ship including the double-shell tank.

## Solution to Problem

A double-shell tank according to one aspect of the present disclosure includes: an inner shell having a non-spherical hollow shell shape and including therein a storing portion; an outer shell that covers the inner shell; and powdered thermal insulation that is filled in a space surrounded by an outer wall of the inner shell and an inner wall of the outer shell to become a heat insulating layer. A size of a top portion gap between the inner shell in an empty state and the outer shell is larger than a size of a bottom portion gap between the inner shell and the outer shell. A thickness of the powdered thermal insulation of the top portion gap in the empty state is larger than the size of the bottom portion gap.

In the above double-shell tank, it is desirable that the size of the top portion gap in the empty state be equal to or more than a value obtained by adding a height to the size of the bottom portion gap, the height being a height that is from a top portion of the outer shell and corresponds to a volume of a void generated when the powdered thermal insulation moves downward by contraction deformation of the inner shell.

Moreover, a ship according to one aspect of the present disclosure includes the double-shell tank configured as above.

In the double-shell tank and the ship including the double-shell tank, the size of the top portion gap of the double-shell tank is larger than the size of the bottom portion gap of the double-shell tank. Therefore, the heat insulating layer thicker than the heat insulating layer located at the tank bottom portion can be formed at the tank top portion in the empty state. Then, the thickness of the powdered thermal insulation of the top portion gap of the double-shell tank in the empty state is larger than the size of the bottom portion gap. Therefore, when the low temperature liquid is supplied to the inner shell, and this contracts the inner shell, the gap between the inner shell and the outer shell increases, and the powdered thermal insulation filled in between the inner shell and the outer shell moves downward. However, even when the powdered thermal insulation moves downward, the heat insulating layer having an adequate thickness is maintained at the tank top portion.

**Advantageous Effects of Invention**

The present disclosure can provide the double-shell tank that can maintain the heat insulating layer having an appropriate thickness at the tank top portion even after the powdered thermal insulation moves downward by the contraction deformation of the inner shell, and a ship including the double-shell tank.

**Brief Description of Drawings**

FIG. 1 is a diagram showing a ship including a double-shell tank according to one embodiment of the present disclosure.
FIG. 2 is a sectional view showing the entire configuration of the double-shell tank in an empty state according to Embodiment 1 of the present disclosure.
FIG. 3 is a sectional view showing that the double-shell tank shown in FIG. 2 is in a full state.
FIG. 4 is a sectional view showing the entire configuration of the double-shell tank in the empty state according to Embodiment 2 of the present disclosure.
FIG. 5 is a sectional view showing that the double-shell tank shown in FIG. 4 is in the full state.
FIG. 6 is a sectional view showing the entire configuration of the double-shell tank in the empty state according to Embodiment 3 of the present disclosure.
FIG. 7 is a sectional view showing that the double-shell tank shown in FIG. 6 is in the full state.
FIG. 8 is a sectional view showing the entire configuration of the double-shell tank in the empty state according to Embodiment 4 of the present disclosure.
FIG. 9 is a sectional view showing the entire configuration of the double-shell tank in the empty state according to Embodiment 5 of the present disclosure.

**Description of Embodiments**

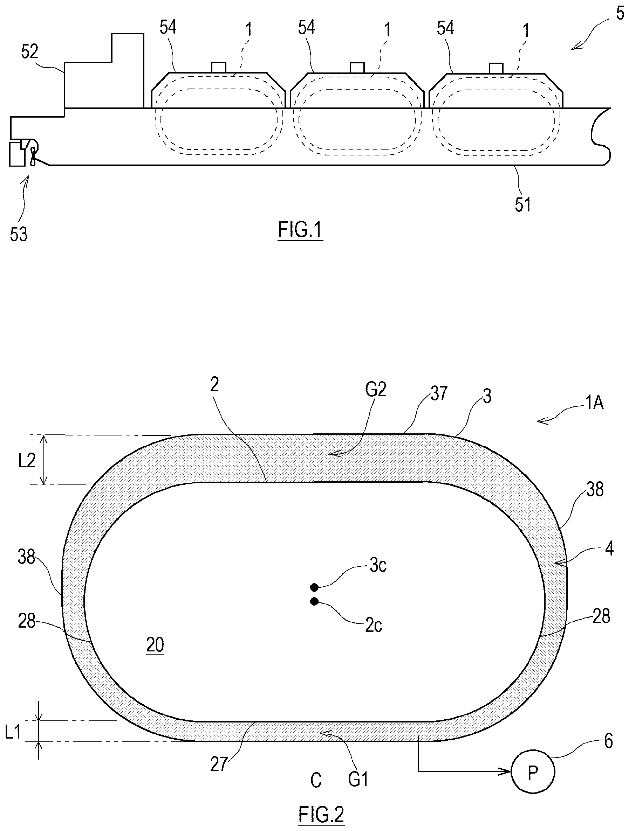

FIG. 1 is a diagram showing a ship 5 including a double-shell tank 1 according to one embodiment of the present disclosure. The ship 5 shown in FIG. 1 is, for example, a liquefied gas carrier. The double-shell tank 1 is utilized to store a low temperature liquid, such as liquid hydrogen, liquid nitrogen, or liquefied natural gas. A bridge 52 is located at an upper-rear portion of a hull 51 of the ship 5, and a propulsor 53 is located at a lower-rear portion of the hull 51 of the ship 5. The hull 51 includes a plurality of (in the present embodiment, three) double-shell tanks 1 lined up in a ship longitudinal direction. The double-shell tanks 1 are located so as to project upward from an upper deck of the hull 51, and upper portions of the double-shell tanks 1 are covered with tank covers 54. Each double-shell tank 1A is supported by the hull 51 through a skirt or a post (not shown). Hereinafter, Embodiments 1 to 5 of the double-shell tank 1 (double-shell tanks 1A to 1E) will be described.

**Embodiment 1**

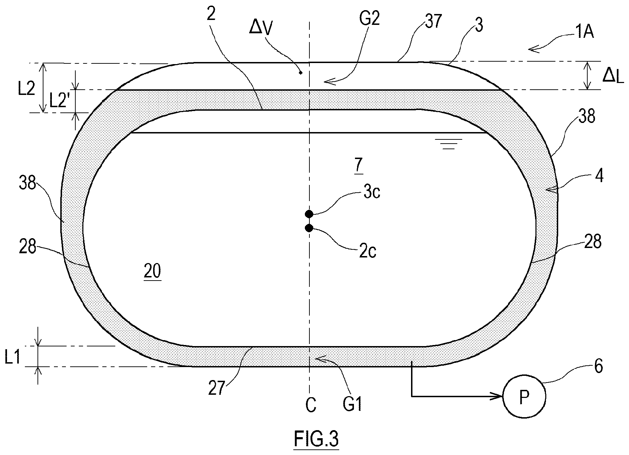

Next, the double-shell tank 1A according to Embodiment 1 of the present disclosure will be described with reference to the drawings. FIG. 2 is a sectional view showing the entire configuration of the double-shell tank 1A in an empty state according to Embodiment 1 of the present disclosure. FIG. 3 is a sectional view showing that the double-shell tank 1A shown in FIG. 2 is in a full state.

The double-shell tank 1A shown in FIGS. 2 and 3 includes: an inner shell 2; an outer shell 3 that covers the inner shell 2; powdered thermal insulation 4 filled in between the inner shell 2 and the outer shell 3 to become a heat insulating layer; and a vacuum pump 6 that performs vacuum drawing with respect to a space between the inner shell 2 and the outer shell 3.

The inner shell 2 has a non-spherical hollow shell shape and includes, for example, a large number of SUS panels welded to each other. A storing portion 20 that stores a low temperature liquid 7 in a sealed sate is inside the inner shell 2. The inner shell 2 allows contraction deformation and deformation recovery which are caused by a temperature difference between normal temperature at the time of tank construction and low temperature at the time when the low temperature liquid 7 is in the inner shell 2.

The outer shell 3 has a non-spherical hollow shell shape larger than the inner shell 2 by one size and includes, for example, a large number of steel plates welded to each other. The inner shell 2 is supported by the outer shell 3 through, for example, a rod (not shown) that connects an outer wall of the inner shell 2 and an inner wall of the outer shell 3.

In the double-shell tank 1A shown in FIG. 2, the inner shell 2 has a hollow spherical shell shape extending in a horizontal direction. The inner shell 2 includes: a cylindrical body portion 27 extending in the horizontal direction; and hemispherical side portions 28 which close both ends of the body portion. A section of the inner shell 2 which is parallel to the ship longitudinal direction has an oval shape (also called a rounded rectangular shape) whose longitudinal direction corresponds to the horizontal direction. A section of the inner shell 2 which is parallel to a ship width direction has a circular shape. However, the section of the inner shell 2 which is parallel to the ship width direction may have an oval shape whose longitudinal direction corresponds to the horizontal direction, and the section of the inner shell 2 which is parallel to the ship longitudinal direction may have a circular shape.

As with the inner shell 2, the outer shell 3 has a hollow spherical shell shape extending in the horizontal direction. The outer shell 3 includes: a substantially cylindrical body portion 37 whose center axis direction corresponds to the horizontal direction; and substantially hemispherical side portions 38 which close both ends of the body portion. A section of the outer shell 3 which is parallel to the ship longitudinal direction has a substantially oval shape whose longitudinal direction corresponds to the horizontal direction, and a section of the outer shell 3 which is parallel to the ship width direction has an oval shape whose longitudinal direction corresponds to an upper-lower direction. However, the section of the outer shell 3 which is parallel to the ship width direction may have a substantially oval shape whose longitudinal direction corresponds to the horizontal direction, and the section of the outer shell 3 which is parallel to the ship longitudinal direction may have an oval shape whose longitudinal direction corresponds to the upper-lower direction. The diameter of the body portion 37 of the outer shell 3 is larger than the diameter of the body portion 27 of the inner shell 2. A center 3c of the outer shell 3 is located higher than a center 2c of the inner shell 2.

The powdered thermal insulation 4 is filled in a pressure sealed state in a space surrounded by an outer wall of the inner shell 2 and an inner wall of the outer shell 3. The powdered thermal insulation 4 is, for example, granular pearlite. The powdered thermal insulation 4 may be a known powdered thermal insulation other than pearlite. Moreover, a fibrous heat insulating material, such as glass wool, may be partially located in the space surrounded by the outer wall of the inner shell 2 and the inner wall of the outer shell 3.

The space between the inner shell 2 and the outer shell 3 is subjected to forced air exhaustion by the vacuum pump 6, and therefore, is in a substantially vacuum state. Since the space filled with the powdered thermal insulation 4 is in a substantially vacuum state, the heat insulating effect is further improved. However, the space between the inner shell 2 and the outer shell 3 does not necessarily have to be in a vacuum state and may be filled with gas in accordance with the characteristics of the low temperature liquid 7 stored in the storing portion 20.

A vertical line passing through the center 3c of the outer shell 3 and a vertical line passing through the center 2c of the inner shell 2 coincide with a tank center line C of the double-shell tank 1A. A gap between the inner wall of the outer shell 3 and the outer wall of the inner shell 2 on the tank center line C at a tank bottom portion is referred to as a "bottom portion gap G1". Moreover, a gap between the inner wall of the outer shell 3 and the outer wall of the inner shell 2 on the tank center line C at a tank top portion is referred to as a "top portion gap G2". In the present description, the "tank top portion" denotes a portion corresponding to the top portion of the double-shell tank 1A in the space which is located outside the inner shell 2 and inside the outer shell 3. Moreover, in the present description, the "tank bottom portion" denotes a portion corresponding to the bottom portion of the double-shell tank 1A in the space which is outside the inner shell 2 and inside the outer shell 3.

In the double-shell tank 1A according to the present embodiment, the inner shell 2 and the outer shell 3 are located such that the top portion gap G2 is larger than the bottom portion gap G1.

When the low temperature liquid 7 is stored in the inner shell 2, the contraction deformation of the inner shell 2 occurs. With this, the powdered thermal insulation 4 moves downward, and this generates a void at the tank top portion. A difference between the volume of the void of the tank top portion in the empty state (FIG. 2) and the volume of the void of the tank top portion in the full state (FIG. 3) is referred to as a void volume $\Delta V$. The void volume $\Delta V$ can be obtained by calculation or simulation. The empty state denotes that the storing portion 20 of the inner shell 2 is in an empty state (FIG. 2), and is, for example, a state where there is no load (or a liquid level can be regarded as empty) or a state where the inner shell 2 has been produced. Moreover, the full state denotes that the storing portion 20 of the inner shell 2 stores the low temperature liquid 7 to a predetermined full liquid level (FIG. 3). A height which is from the tank top portion and corresponds to the void volume $\Delta V$ is represented by $\Delta L$. The height $\Delta L$ can be obtained by calculation utilizing information, such as the shape of the outer shell 3. A size L2 of the top portion gap G2 in the empty state is equal to or more than a value obtained by adding the height $\Delta L$ to a size L1 of the bottom portion gap G1, the height $\Delta L$ being a height that is from the tank top portion and corresponds to the void volume $\Delta V$. The size L2 of the top portion gap G2 in the empty state, the size L1 of the bottom portion gap G1, and the height $\Delta L$ satisfies Formula 1 below.

$$L2 > L1 + \Delta L \ ... \quad \text{Formula 1}$$

Since the excessive size L2 of the top portion gap G2 in the empty state is not economical, it is desirable that the size L2 of the top portion gap G2 in the empty state be a small one of values that satisfy Formula 1.

Then, the thickness of the powdered thermal insulation 4 of the top portion gap G2 in the empty state is larger than the size L1 of the bottom portion gap G1. Desirably, the thickness of the powdered thermal insulation 4 of the top portion gap G2 in the full state is equal to or more than the thickness of the powdered thermal insulation 4 of the bottom portion gap G1. The top portion gap G2 in the empty state may be filled with the powdered thermal insulation 4.

As described above, the double-shell tank 1A according to the present embodiment includes: the inner shell 2 having a hollow shell shape and including therein the storing portion 20; the outer shell 3 that covers the inner shell 2; and the heat insulating material (in the present embodiment, the powdered thermal insulation 4) that is filled in the space surrounded by the outer wall of the inner shell 2 and the inner wall of the outer shell 3 to become the heat insulating layer. Then, the size of the top portion gap G2 between the inner shell 2 in the empty state and the outer shell 3 is larger than the size of the bottom portion gap G1 between the inner shell 2 and the outer shell 3.

It is desirable that the thickness of the powdered thermal insulation 4 of the top portion gap G2 in the empty state be larger than the size L1 of the bottom portion gap G1. Moreover, it is desirable that the size L2 of the top portion gap G2 in the empty state be equal to or more than a value obtained by adding the height $\Delta L$ to the size L1 of the bottom portion gap G1, the height $\Delta L$ being a height that is from the top portion of the outer shell 3 and corresponds to the volume (void volume $\Delta V$) of the void generated when the powdered thermal insulation 4 moves downward by the contraction deformation of the inner shell 2.

In the double-shell tank 1A configured as above, in the empty state, the heat insulating layer thicker than the heat insulating layer at the tank bottom portion is located at the tank top portion (see FIG. 2). Then, when the low temperature liquid 7 is supplied to the inner shell 2, and this contracts the inner shell 2, the gap between the inner shell 2 and the outer shell 3 increases, and the powdered thermal insulation 4 filled in between the inner shell 2 and the outer shell 3 moves downward. However, even after the powdered thermal insulation 4 moves downward, the heat insulating layer having an adequate thickness L2' is maintained at the tank top portion (see FIG. 3).

As above, in the double-shell tank 1A according to the present embodiment, even after the powdered thermal insulation 4 moves downward by the contraction deformation of the inner shell 2, the heat insulating layer having the appropriate thickness L2' can be maintained at the tank top portion.

**Embodiment 2**

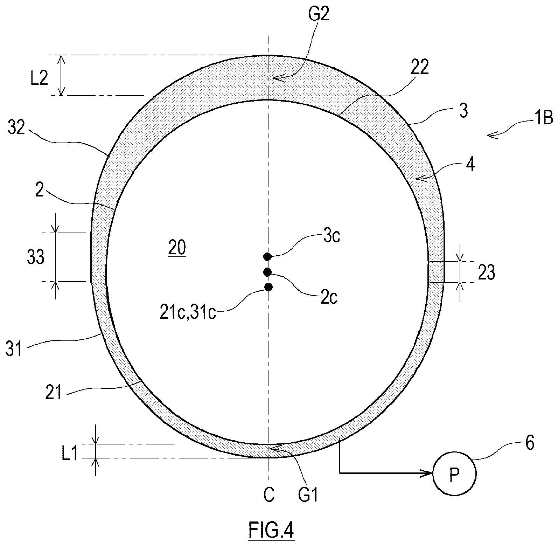

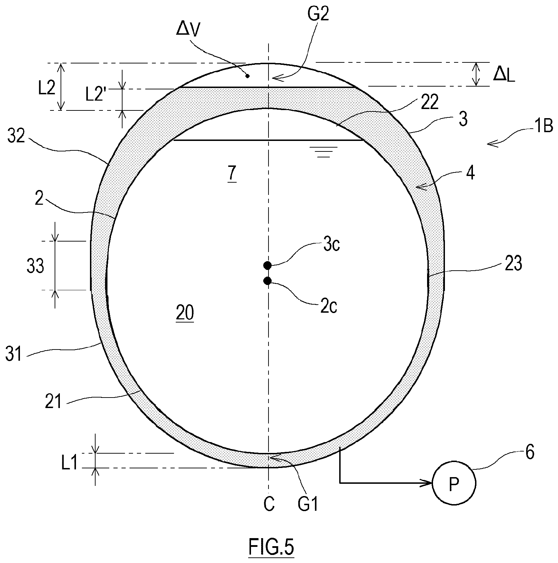

Next, the double-shell tank 1B according to Embodiment 2 of the present disclosure will be described. FIG. 4 is a sectional view showing the entire configuration of the double-shell tank 1B in the empty state according to Embodiment 2 of the present disclosure. FIG. 5 is a sectional view showing that the double-shell tank 1B shown in FIG. 4 is in the full state. In the explanation of the present embodiment, the same reference signs are used for the same or similar components as or to those in Embodiment 1, and the repetition of the same explanation is avoided.

As shown in FIGS. 4 and 5, the double-shell tank 1B according to the present embodiment includes: the inner shell 2 having a non-spherical shape and including therein the storing portion 20; the outer shell 3 that covers the inner shell 2; and the powdered thermal insulation 4 that is filled in the space surrounded by the outer wall of the inner shell 2 and the inner wall of the outer shell 3 to become the heat insulating layer.

In the double-shell tank 1B according to the present embodiment, the inner shell 2 has a hollow spherical shell shape extending in the upper-lower direction. The inner shell 2 includes a lower hemispherical shell portion 21, an upper hemispherical shell portion 22, and a tubular body portion 23 connecting the lower hemispherical shell portion 21 and the upper hemispherical shell portion 22. The diameter of the lower hemispherical shell portion 21, the diameter of the upper hemispherical shell portion 22, and the diameter of the body portion 23 are equal to each other.

Moreover, in the double-shell tank 1B, the outer shell 3 has a hollow spherical shell shape extending in the upper-lower direction. The outer shell 3 includes a lower hemispherical shell portion 31, an upper hemispherical shell portion 32, and a tubular body portion 33 connecting the lower hemispherical shell portion 31 and the upper hemispherical shell portion 32 in the upper-lower direction. The diameter of the lower hemispherical shell portion 31, the diameter of the upper hemispherical shell portion 32, and the diameter of the body portion 33 are equal to each other, and this diameter is larger than the diameter of the inner shell 2. Then, the height of the body portion 33 of the outer shell 3 is larger than the height of the body portion 23 of the inner shell 2. The inner shell 2 and the outer shell 3 are located such that a center 21c of the lower hemispherical shell portion 21 of the inner shell 2 and a center 31c of the lower hemispherical shell portion 31 of the outer shell 3 coincide with each other.

In the double-shell tank 1B, as with the double-shell tank 1A, the size L2 of the top portion gap G2 between the inner shell 2 and the outer shell 3 is larger than the size L1 of the bottom portion gap G1 between the inner shell 2 and the outer shell 3. Moreover, the thickness of the powdered thermal insulation 4 of the top portion gap G2 in the empty state is larger than the size L1 of the bottom portion gap G1.

In the double-shell tank 1B according to the present embodiment, the outer shell 3 includes the lower hemispherical shell portion 31, the upper hemispherical shell portion 32, and the tubular body portion 33 connecting the lower hemispherical shell portion 31 and the upper hemispherical shell portion 32, the inner shell 2 includes the lower hemispherical shell portion 21, the upper hemispherical shell portion 22, and the tubular body portion 23 connecting the lower hemispherical shell portion 21 and the upper hemispherical shell portion 22, and the height of the body portion 33 of the outer shell 3 is larger than the height of the body portion 23 of the inner shell 2. As above, in the double-shell tank 1B, the inner shell 2 has a spherical shell shape extending in the upper-lower direction. Therefore, in addition to the operational advantage of the double-shell tank 1A according to Embodiment 1, the double-shell tank 1B can obtain an operational advantage in which the capacity of the storing portion 20 relative to an occupied floor area can be made larger than when each of the inner shell 2 and the outer shell 3 has a perfectly spherical shell shape.

## Embodiment 3

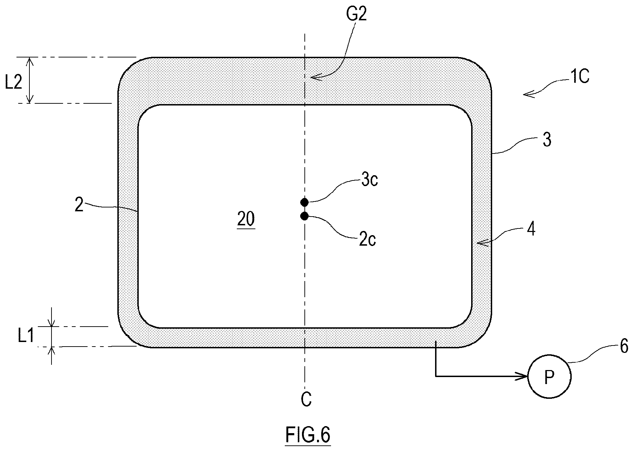

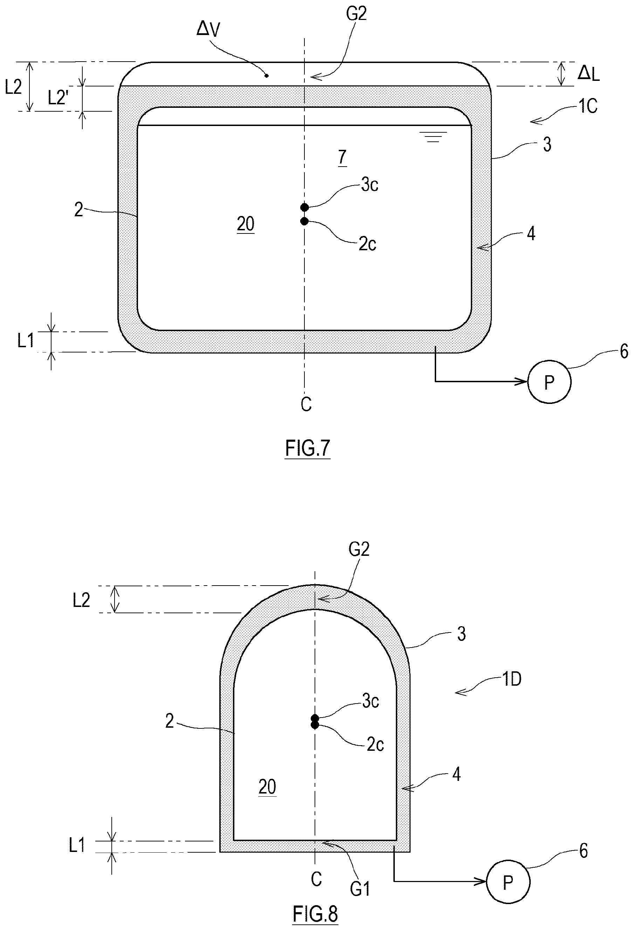

Next, the double-shell tank 1C according to Embodiment 3 of the present disclosure will be described. FIG. 6 is a sectional view showing the entire configuration of the double-shell tank 1C in the empty state according to Embodiment 3 of the present disclosure. FIG. 7 is a sectional view showing that the double-shell tank 1C shown in FIG. 6 is in the full state. In the explanation of the present embodiment, the same reference signs are used for the same or similar components as or to those in Embodiment 1, and the repetition of the same explanation is avoided.

As shown in FIGS. 6 and 7, the double-shell tank 1C according to the present embodiment includes: the inner shell 2 having a non-spherical shape and including therein the storing portion 20; the outer shell 3 that covers the inner shell 2; and the powdered thermal insulation 4 that is filled in the space surrounded by the outer wall of the inner shell 2 and the inner wall of the outer shell 3 to become the heat insulating layer.

In the double-shell tank 1C according to the present embodiment, each of the outer shell 3 and the inner shell 2 has a rectangular solid hollow shell shape. To be specific, each of the outer shell 3 and the inner shell 2 is a rectangular tank. Then, the center 3c of the outer shell 3 is located higher than the center 2c of the inner shell 2.

In the double-shell tank 1C, as with the double-shell tank 1A, the size L2 of the top portion gap G2 between the inner shell 2 and the outer shell 3 is larger than the size L1 of the bottom portion gap G1 between the inner shell 2 and the outer shell 3. Moreover, the thickness of the powdered thermal insulation 4 of the top portion gap G2 in the empty state is larger than the size L1 of the bottom portion gap G1.

In addition to the operational advantage of the double-shell tank 1A according to Embodiment 1, the double-shell tank 1C according to the present embodiment can obtain an operational advantage in which the capacity of the storing portion 20 relative to an occupied floor area can be made larger than when each of the inner shell 2 and the outer shell 3 has a perfectly spherical shell shape.

## Embodiment 4

Next, the double-shell tank 1D according to Embodiment 4 of the present disclosure will be described. FIG. 8 is a sectional view showing the entire configuration of the double-shell tank 1D in the empty state according to Embodiment 4 of the present disclosure. In the explanation of the present embodiment, the same reference signs are used for the same or similar components as or to those in Embodiment 1, and the repetition of the same explanation is avoided.

As shown in FIG. 8, the double-shell tank 1D according to the present embodiment includes: the inner shell 2 having a non-spherical shape and including therein the storing portion 20; the outer shell 3 that covers the inner shell 2; and the powdered thermal insulation 4 that is filled in the space surrounded by the outer wall of the inner shell 2 and the inner wall of the outer shell 3 to become the heat insulating layer.

In the double-shell tank 1D according to the present embodiment, each of the outer shell 3 and the inner shell 2 has a flat-bottom cylindrical hollow shell shape. The inner shell 2 includes: a circular flat bottom portion; a cylindrical body portion standing from a periphery of the bottom; and a top portion connected to an upper portion of the body portion and having a hemispherical shell shape. As with the inner shell 2, the outer shell 3 includes: a circular flat bottom portion; a cylindrical body portion standing from a periphery of the bottom; and a top portion connected to an upper portion of the body portion and having a hemispherical shell shape. The body portion of the outer shell 3 is larger in diameter and height than the body portion of the inner shell 2. Then, the center 3c of the outer shell 3 is located higher than the center 2c of the inner shell 2.

In the double-shell tank 1D according to the present embodiment, as with the double-shell tank 1A, the size L2 of the top portion gap G2 between the inner shell 2 and the outer shell 3 is larger than the size L1 of the bottom portion gap G1 between the inner shell 2 and the outer shell 3. Moreover, the thickness of the powdered thermal insulation 4 of the top portion gap G2 in the empty state is larger than the size L1 of the bottom portion gap G1.

Since the bottom portion of the inner shell 2 is the flat bottom, in addition to the operational advantage of the double-shell tank 1A according to Embodiment 1, the double-shell tank 1D according to the present embodiment can obtain an operational advantage in which the capacity of the storing portion 20 relative to an occupied floor area can be made larger than when each of the inner shell 2 and the outer shell 3 has a perfectly spherical shell shape.

**Embodiment 5**

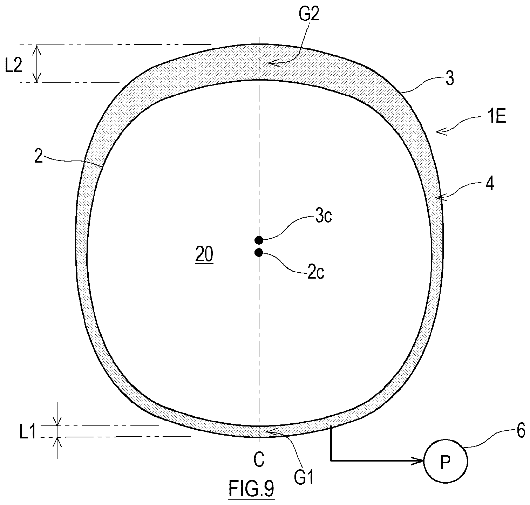

Next, the double-shell tank 1E according to Embodiment 5 of the present disclosure will be described. FIG. 9 is a sectional view showing the entire configuration of the double-shell tank 1E in the empty state according to Embodiment 5 of the present disclosure. In the explanation of the present embodiment, the same reference signs are used for the same or similar components as or to those in Embodiment 1, and the repetition of the same explanation is avoided.

As shown in FIG. 9, the double-shell tank 1E according to the present embodiment includes: the inner shell 2 having a non-spherical shape and including therein the storing portion 20; the outer shell 3 that covers the inner shell 2; and the powdered thermal insulation 4 that is filled in the space surrounded by the outer wall of the inner shell 2 and the inner wall of the outer shell 3 to become the heat insulating layer.

In the double-shell tank 1E according to the present embodiment, the inner shell 2 includes: a top portion and a bottom portion, each of which has a shape of a part of a perfect sphere; and a body portion which has a shape of a part of a non-perfect sphere. The top portion and the body portion are smoothly continuous with each other, and the bottom portion and the body portion are smoothly continuous with each other. A curvature center of the top portion is located lower than the center 2c of the inner shell 2, and a curvature center of the bottom portion is located higher than the center 2c of the inner shell 2. The diameter of an equator portion of the body portion is substantially equal to the diameter of a virtual perfect sphere a part of which is formed by each of the top portion and the body portion. A connection portion between the body portion and the top portion and a connection portion between the body portion and the bottom portion expand outward beyond the virtual perfect sphere a part of which is formed by each of the top portion and the body portion.

In the double-shell tank 1E, as with the inner shell 2, the outer shell 3 includes: a top portion and a bottom portion, each of which has a shape of a part of a perfect sphere; and a body portion which has a shape of a part of a non-perfect sphere. A curvature radius of the top portion of the outer shell 3 and a curvature radius of the bottom portion of the outer shell 3 are larger than a curvature radius of the top portion of the inner shell 2 and a curvature radius of the bottom portion of the inner shell 2. A height of the body portion of the outer shell 3 is larger than a height of the body portion of the inner shell 2. Then, the center 3c of the outer shell 3 is located higher than the center 2c of the inner shell 2.

In the double-shell tank 1E according to the present embodiment, as with the double-shell tank 1A, the size L2 of the top portion gap G2 between the inner shell 2 and the outer shell 3 is larger than the size L1 of the bottom portion gap G1 between the inner shell 2 and the outer shell 3. Moreover, the thickness of the powdered thermal insulation 4 of the top portion gap G2 in the empty state is larger than the size L1 of the bottom portion gap G1.

Since the inner shell 2 has a spherical shell shape that partially expands beyond the perfect sphere, in addition to the operational advantage of the double-shell tank 1A according to Embodiment 1, the double-shell tank 1E according to the present embodiment can obtain an operational advantage in which the capacity of the storing portion 20 relative to an occupied floor area can be made large.

The foregoing has described preferred embodiments of the present disclosure. Modifications of specific structures and/or functional details of the above embodiments may be included in the present disclosure as long as they are within the scope of the present disclosure. The above configuration may be modified as below, for example.

For example, although each of the double-shell tanks 1 and 1A to 1E according to the above embodiments is supported by the hull 51, the double-shell tanks 1 and 1A to 1E may be located on the ground. In a case where each of the double-shell tanks 1 and 1A to 1E is supported by the hull 51, the heat insulating layer having an adequate thickness is maintained at the tank top portion even when the powdered thermal insulation 4 moves downward by rolling, pitching, or vibrating of the hull 51.

**Reference Signs List**

| | |
|---|---|
| 1, 1A, 1B, 1C, 1D, 1E | double-shell tank |
| 2 | inner shell |
| 2c | center of inner shell |
| 3 | outer shell |
| 3c | center of outer shell |
| 4 | powdered thermal insulation |
| 5 | ship |
| 51 | hull |
| 6 | vacuum pump |
| 7 | low temperature liquid |
| 20 | storing portion |
| 21, 31 | lower hemispherical shell portion |
| 31c | center of lower hemispherical shell portion |
| 22, 32 | upper hemispherical shell portion |
| 23, 33 | body portion |
| C | tank center line |
| G1 | bottom portion gap |
| G2 | top portion gap |

**Claims**

1. A double-shell tank comprising:

   an inner shell having a non-spherical hollow shell shape and including therein a storing portion;
   an outer shell that covers the inner shell; and
   powdered thermal insulation that is filled in a space surrounded by an outer wall of the inner shell and an inner wall of the outer shell to become a heat insulating layer, wherein:

      a size of a top portion gap between the inner shell in an empty state and the outer shell is larger than a size of a bottom portion gap between the inner shell and the outer shell; and
      a thickness of the powdered thermal insulation of the top portion gap in the empty state is larger than the size of the bottom portion gap.

2. The double-shell tank according to claim 1, wherein the size of the top portion gap in the empty state is equal to or more than a value obtained by adding a height to the size of the bottom portion gap, the height being a height that is from a top portion of the outer shell and corresponds to a volume of a void generated when the powdered thermal insulation moves downward by contraction deformation of the inner shell.

3. The double-shell tank according to claim 1 or 2, wherein a center of the outer shell is located higher than a center of the inner shell.

4. The double-shell tank according to claim 1 or 2, wherein:

   the outer shell includes a lower hemispherical shell portion, an upper hemispherical shell portion, and a tubular body portion connecting the lower hemispherical shell portion and the upper hemispherical shell portion;
   the inner shell includes a lower hemispherical shell portion, an upper hemispherical shell portion, and a tubular body portion connecting the lower hemispherical shell portion and the upper hemispherical shell portion; and
   a height of the body portion of the outer shell is larger than a height of the body portion of the inner shell.

5. A ship comprising the double-shell tank according to any one of claims 1 to 4.

FIG.1

FIG.2

FIG.3

FIG.4

FIG.5

FIG.6

FIG.7

FIG.8

FIG.9

## INTERNATIONAL SEARCH REPORT

International application No.

PCT/JP2020/025367

| A. CLASSIFICATION OF SUBJECT MATTER |
|---|
| Int.Cl. F17C3/04(2006.01)i, B65D88/12(2006.01)i<br>FI: F17C3/04C, B65D88/12G |
| According to International Patent Classification (IPC) or to both national classification and IPC |

| B. FIELDS SEARCHED |
|---|
| Minimum documentation searched (classification system followed by classification symbols)<br>Int.Cl. F17C3/04, B65D88/12 |

| Documentation searched other than minimum documentation to the extent that such documents are included in the fields searched |
|---|
| Published examined utility model applications of Japan   1922-1996<br>Published unexamined utility model applications of Japan   1971-2020<br>Registered utility model specifications of Japan   1996-2020<br>Published registered utility model applications of Japan   1994-2020 |

| Electronic data base consulted during the international search (name of data base and, where practicable, search terms used) |
|---|
|  |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 7-243590 A (TEISAN KK) 19 September 1995 (1995-09-19), paragraphs [0020]-[0031], fig. 1-8 | 1-5 |
| A | JP 11-6600 A (ISHIKAWAJIMA-HARIMA HEAVY INDUSTRIES CO., LTD.) 12 January 1999 (1999-01-12), paragraphs [0009]-[0016], fig. 1-3 | 1-5 |
| A | US 2003/0029877 A1 (MATHUR, V. K.) 13 February 2003 (2003-02-13), paragraphs [0025]-[0043], fig. 1-3 | 1-5 |
| A | CD-ROM of the specification and drawings annexed to the request of Japanese Utility Model Application No. 50275/1992 (Laid-open No. 25194/1994) (IHI PLANTEC KK) 05 April 1994 (1994-04-05), paragraphs [0008]-[0015], fig. 1, 2 | 1-5 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 July 2020 | Date of mailing of the international search report<br>28 July 2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/025367

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-16806 A (MITSUBISHI HEAVY INDUSTRIES, LTD.) 01 February 2016 (2016-02-01), paragraphs [0019]-[0053], fig. 1-10 | 1-5 |
| A | KR 10-2018-0029170 A (SAMSUNG HEAVY IND.) 20 March 2018 (2018-03-20), paragraphs [0025]-[0053], fig. 1-3 | 1-5 |

Form PCT/ISA/210 (second sheet) (January 2015)

INTERNATIONAL SEARCH REPORT
Information on patent family members

| International application No. |
|---|
| PCT/JP2020/025367 |

| | | |
|---|---|---|
| JP 7-243590 A | 19 September 1995 | (Family: none) |
| JP 11-6600 A | 12 January 1999 | (Family: none) |
| US 2003/0029877 A1 | 13 February 2003 | (Family: none) |
| JP 6-25194 U1 | 05 April 1994 | (Family: none) |
| JP 2016-16806 A | 01 February 2016 | KR 10-2016-0144441 A<br>CN 106458296 A |
| KR 10-2018-0029170 A | 20 March 2018 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013238285 A